# EUROPÄISCHE PATENTSCHRIFT

(11) **EP 0 573 790 B1**
(45) Veröffentlichungstag und Bekanntmachung des Hinweises auf die Patenterteilung: **27.05.1998**
(21) Anmeldenummer: 93107449.6
(22) Anmeldetag: 07.05.1993
(51) Int. Cl.: G11B 23/023

(54) **Vorrichtung zur Aufbewahrung von Magnetbandkassetten**
Device for storing magnetic tape cassettes
Dispositif d'emmagasinage de cassettes à bande magnétique

(30) Priorität: 12.06.1992 DE 4219233
(43) Veröffentlichungstag der Anmeldung: 15.12.1993
(73) Patentinhaber: fischerwerke Artur Fischer GmbH & Co. KG, D-72178 Waldachtal (DE)
(72) Erfinder: Bieck, Torsten, Dipl.-Ing., 72280 Dornstetten/Hallwangen (DE); Nehl, Wolfgang, 72178 Waldachtal /Tumlingen (DE)

(56) Entgegenhaltungen:
- WO-A-92/22899
- DE-A- 2 462 899
- FR-A- 2 274 107

## Beschreibung

Die Erfindung betrifft eine Vorrichtung zur Aufbewahrung von Magnetbandkassetten gemäß der Gattung des Hauptanspruches.

Aus der US- PS 3 899 229 ist ein Aufbewahrungsbehälter für Magnetbandkassetten mit einem Gehäuse bekannt, in dem ein Schieber angeordnet ist, der gegen eine Federkraft in das Gehäuse einschiebbar und in der eingeschobenen Position verriegelbar ist. Der Schieber nimmt die jeweils aufzubewahrende Kassette auf, die in der Entnahmeposition des Schiebers bequem entnommen oder ausgetauscht werden kann. In der Entnahmeposition steht der Schieber deutlich aus dem Gehäuse heraus. In der Aufbewahrungsposition läßt sich der Schieber im Gehäuse verriegeln, wobei durch Betätigung einer Taste die Entriegelung erfolgen kann.

Derartige Aufbewahrungsbehälter werden zur Aufbewahrung der handelsüblichen Kompaktkassetten verwendet, deren Bandwickelkerne frei zugänglich sind. Damit die Wickelkerne und damit auch das aufgewickelte Band bei Erschütterungen keine unkontrollierten Bewegungen ausführt, sind Aufbewahrungsbehälter mit Sperrorganen für die Wickelkerne entwickelt worden. Eine bekannte Vorrichtung dieser Art sieht vor, daß am Schieber starre Sperrnocken abstehen, die beim Auflegen einer Kompaktkassette in die Wickelkerne eingreifen und diese gegen Verdrehen sichern. Auf einen Schieber mit derart starr angebrachten Sperrnocken läßt sich keine geschlossene Magnetbandkassette auflegen, weshalb diese bekannte Vorrichtung zur Aufnahme von Digitalkassetten (DCC), die vollständig geschlossene Breitseiten besitzt, nicht geeignet ist.

Eine gattungsgemäße Vorrichtung zur Aufbewahrung von Magnetkassetten ist auch aus der FR-A 22 74 107 bekannt. Die Vorrichtung besteht aus einem Gehäuse und einem gegen eine Federkraft in das Gehäuse in eine Aufbewahrungsposition einschiebaren Schieber, der in die beiden Bandwickelkerne einer in der Vorrichtung aufbewahrten, auf der Auflagefläche des Schiebers aufliegenden Kompaktkassette eingreifende Sperrorgane hat. Diese Sperrorgane sind schwenkbar am Schieber angeordnet und in der Entnahmeposition des Schiebers unter der Auflagefläche gehalten. In der Aufbewahrungsposition werden die Sperrorgane von einer Steuerkante in die Bandwickelkerne eingeschwenkt. Beide Sperrorgane sind als flache Kunststoffriegel ausgebildet und radial abstehend an einer gemeinsamen Welle angeordnet. Die Steuerkante wird durch eine quer zur Bewegungsrichtung des Schiebers liegende Kante des Gehäuses gebildet, die direkt an das schwenkbar gelagerte Sperrorgan beim Einfahren des Schiebers in das Gehäuse angreift. In gleicher Weise wird auch beim Ausfahren des Schiebers die als starre Hebel ausgebildeten Sperrorgane zwangsweise ausgerastet. Damit ist die bekannte Vorrichtung nur zur Aufbewahrung von Musikkassetten geeignet, die offene Spulenkerne aufweisen.

Es gibt Wiedergabegeräte, in denen sowohl Digitalkassetten als auch Kompaktkassetten abgespielt werden können. Die Abmessungen der Digitalkassetten stimmen im wesentlichen mit den Kompaktkassetten überein, so daß eine Aufbewahrung beider Kassetten in einem Aufbewahrungssystem zweckmäßig sein kann.

Der Erfindung liegt die Aufgabe zugrunde, eine Vorrichtung zu schaffen, die zur Aufbewahrung sowohl von Kompaktkassetten mit offenen Spulenkernen als auch von Digitalkassetten mit geschossenen Spulenkernen geeignet ist, wobei bei der Aufbewahrung von Kompaktkassetten eine Bandarretierung erfolgen soll.

Die Lösung dieser Aufgabe wird durch die im Hauptanspruch angegebenen Merkmale erreicht. Die schwenkbar gelagerten Sperrorgane werden mittels eines kreissegmentförmig gebogenen Federdrahtes bei ausgefahrenem Schieber unter dessen Auflagefläche geschwenkt. Bei eingeschobenem Schieber drückt eine innen am Gehäuse abstehende Steuerkante so gegen den Federdraht, daß dieser die Sperrorgane in deren Sperrposition aus der Auflagefläche federnd nach oben drückt. Liegt eine Kompaktkassette mit offenen Bandwickelkernen auf dem Schieber auf, so können die Sperrorgane ungehindert in den Freiraum der Bandwickelkerne eingreifen und diese gegen Verdrehen sperren. Liegt dagegen eine Digitalkassette mit abgedeckten Bandwickelkernen auf dem Schieber auf, so legen sich die Sperrorgane an dem Gehäuse der Digitalkassette an, sobald beim Einschieben des Schiebers die Steuerkante gegen den Federdraht drückt. Aufgrund der Elastizität des Federdrahtes kann dennoch der Schieber problemlos vollständig in das Gehäuse bis zur Aufbewahrungsposition eingeschoben werden, wo er in an sich bekannter Weise verriegelt wird.

Die als flache Kunststoffriegel ausgebildeten Sperrorgane sind an einer gemeinsamen Welle radial abstehend angeordnet, wobei die Welle unter der Auflagefläche des Schiebers gelagert ist. In der Entnahmeposition stehen somit keine Teile der Sperrorgane und der zu deren Betätigung erforderlichen Elemente über die Auflagefläche des Schiebers hinaus. Ein Einlegen und Herausnehmen der Magnetbandkassette ist somit problemlos möglich.

Die Erfindung wird nachfolgend an in der Zeichnung dargestellten Ausführungsbeispielen näher erläutert.

Es zeigen:
Figur 1 den Längsschnitt einer Vorrichtung, mit in Entnahmeposition befindlichem, längs ausgerichtetem Schieber,
Figur 2 die Draufsicht der in Figur 1 dargestellten Vorrichtung,
Figur 3 eine vergrößerte Darstellung der Unterseite des Schiebers von Figur 1 im Bereich der Sperrorgane,
Figur 4 den Schnitt AA von Figur 3 bei aufliegender Kompaktkassette,
Figur 5 den Bereich der Unterseite des Schiebers gemäß Figur 3, jedoch bei in das Gehäuse eingeschobenem Schieber,
Figur 6 den Schnitt BB von Figur 5 bei aufliegender Kompaktkassette,
Figur 7 die Unterseite des Schiebers im Bereich der Sperrorgane bei eingeschobenem Schieber gemäß Figur 5, jedoch bei Aufliegen einer Digitalkassette mit abgedeckten Bandwickelkernen,
Figur 8 den Schnitt CC von Figur 7,
Figur 9 die Draufsicht auf eine Vorrichtung, bei der die einzulegenden Magnetbandkassetten quer auf dem Schieber aufgelegt werden, und
Figur 10 eine Draufsicht bei aufliegender Kompaktkassette im Bereich der Bandwickelkerne.

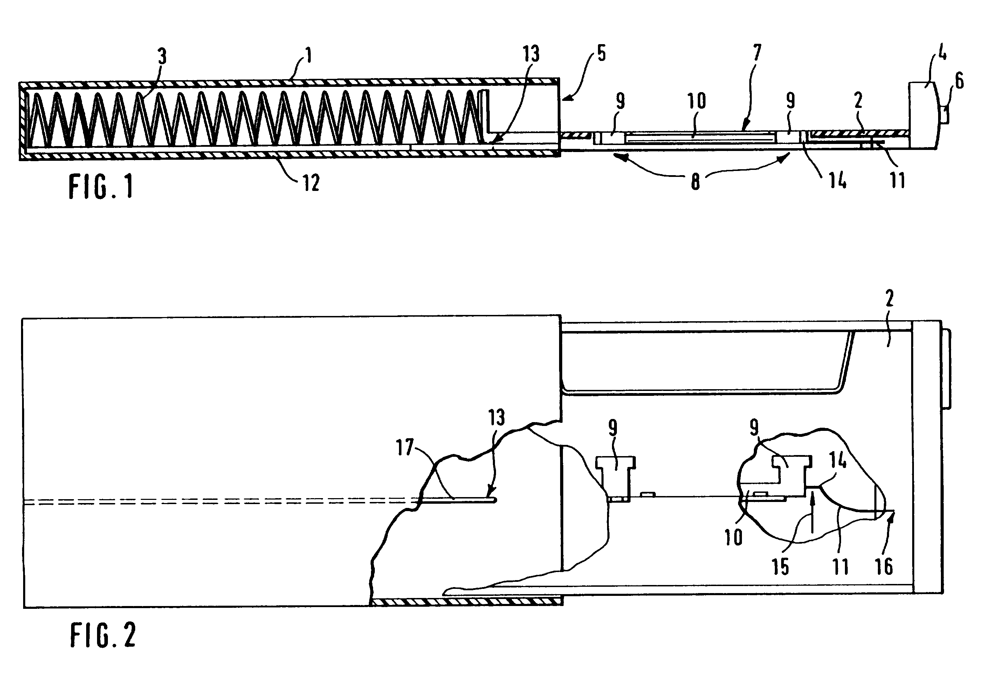

Die in Figur 1 dargestellte Vorrichtung zur Aufbewahrung von Magnetbandkassetten besteht aus einem Gehäuse 1 und einem längs angeordneten, in Entnahmeposition befindlichen Schieber 2, der gegen die Kraft einer im Gehäuse 1 befindlichen Druckfeder 3 in das Gehäuse 1 in eine Aufbewahrungsposition verschiebbar ist. In der Aufbewahrungsposition schließt die vorne am Schieber angeordnete Blende 4 die offene Seite 5 des Gehäuses 1 ab und wird mit dem Gehäuse 1 mittels einer hier nicht dargestellten Verriegelungsvorrichtung verriegelt. Die Entriegelung erfolgt durch eine Betätigung einer Auslösetaste 6, wodurch die Druckfeder 3 den Schieber 2 wieder in die hier dargestellte Entnahmeposition befördert. Die Verriegelungseinrichtungen sind hier nicht näher beschrieben, da diese ansich bekannt und nicht Gegenstand der vorliegenden Erfindung sind.

Auf der Auflagefläche 7 des Schiebers 2 kann in der dargestellten Position eine Digitalkassette oder eine Kompaktkassette aufgelegt werden. Eine am Schieber 2 angebrachte Sperreinrichtung 8 ist in der Entnahmeposition wirkungslos. Deren Sperrorgane 9, die über eine gemeinsame Welle 10 verbunden und schwenkbar gelagert sind, ragen nicht über die Auflagefläche 7 hinaus. Ein Federdraht 11 greift exzentrisch an der Welle 10 derart an, daß die Sperrorgane 9 in der dargestellten Position gehalten werden.

Innen am Boden 12 des Gehäuses 1 steht eine Steuerkante 13 nach oben ab, die beim Einschieben des Schiebers 2 in das Gehäuse 1 am Federdraht 11 zur Anlage kommt.

In Figur 2 ist ersichtlich, daß der Federdraht 11 teilweise kreisbogenförmig gebogen ist. Beim Einschieben des Schiebers 2 kommt die Steuerkante 13 im gebogenen Bereich des Federdrahts 11 mit diesem in Berührung, wodurch dessen an der Welle 10 exzentrisch angreifendes Ende 14 in Pfeilrichtung 15 federnd seitlich weggedrückt wird. Liegt in diesem Fall auf dem Schieber 2 eine Kompaktkassette mit frei zugänglichen Bandwickelkernen auf, so werden dadurch die Sperrorgane 9 in den Freiraum der Bandwickelkerne eingeschwenkt. Liegt dagegen eine geschlossene Digitalkassette auf, so werden die Sperrorgane 9 federnd gegen die Außenseite der Digitalkassette gedrückt.

Der Federdraht 11 ist übrigens mit seinem Ende 16 an der Unterseite des Schiebers 2 seitlich verschiebbar gelagert, wobei jedoch auch eine starre Befestigung denkbar ist. Die Steuerkante 13 ist Teil einer Führungsschiene 17, die den Schieber 2 geradeaus führt.

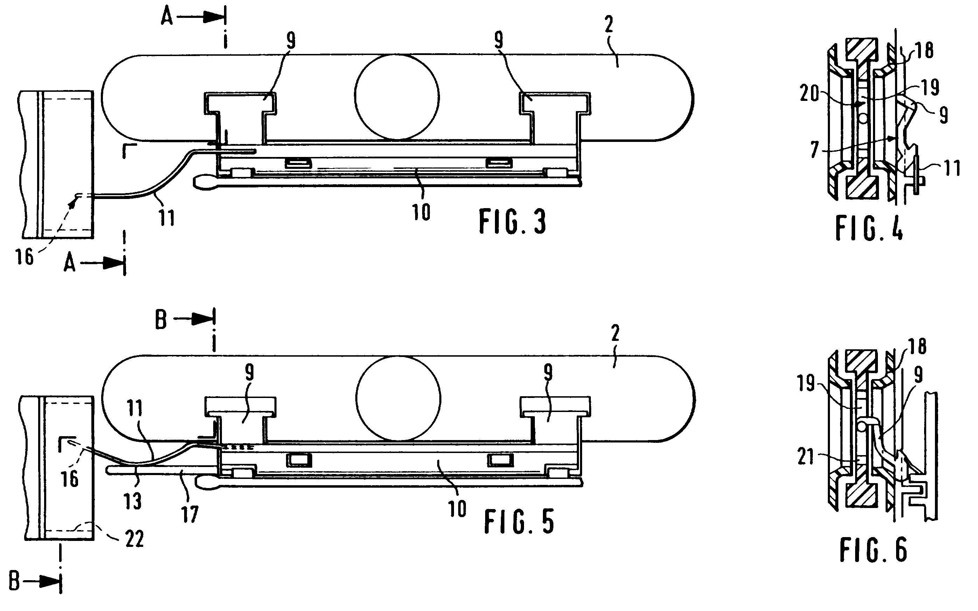

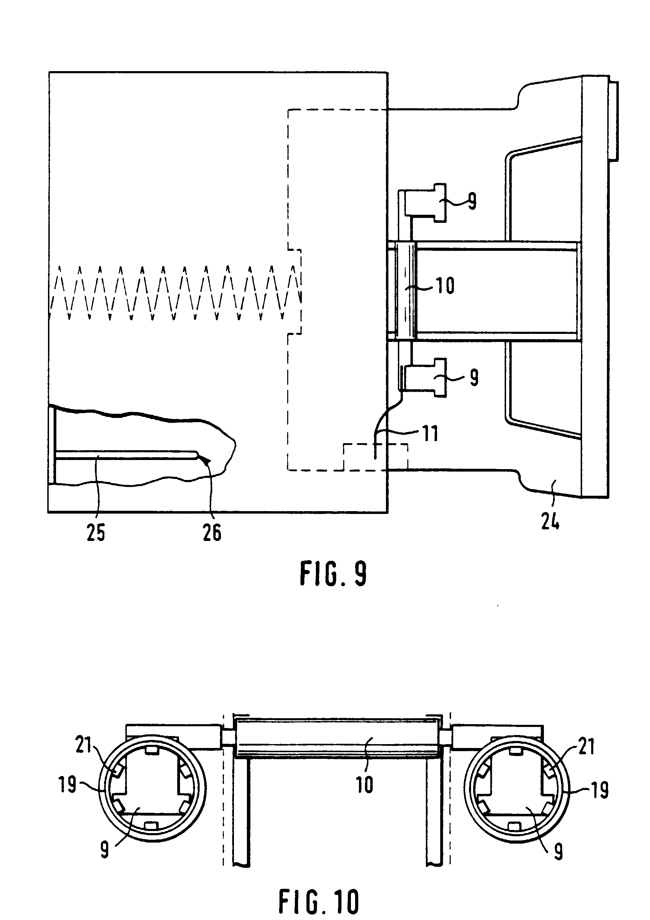

Die Darstellung von Figur 3 zeigt die Unterseite des Schiebers 2 im Bereich der Sperreinrichtung 8 in vergrößerter Darstellung. Der Schieber befindet sich in der Entnahmeposition gemäß Figur 1 bzw. Figur 2. Der Querschnitt von Figur 4 zeigt eine aufliegende Kompaktkassette 18 im Bereich eines Bandwickelkerns 19. Das als Kunstoffriegel ausgebildete Sperrorgan 9 befindet sich noch unterhalb auf der Auflagefläche 7 und greift somit noch nicht in den Freiraum 20 des Bandwickelkerns 19 ein. In Figur 10 ist in einer Draufsicht der Bereich der Bandwickelkerne 19 einer Kompaktkassette dargestellt, wobei die Sperrorgane 9, wie bei Figur 3 und Figur 4, noch nicht zwischen die Mitnehmer 21 der Bandwickelkerne eingreifen.

Bei der Darstellung von Figur 5 befindet sich der Schieber 2 in der Aufbewahrungsposition, d.h. daß der Schieber 2 vollständig in das Gehäuse 1 eingeschoben ist. In dieser Position drückt die seitliche Steuerkante 13 der Führungsleiste 17 den Federdraht 11 zur Seite, so daß sein in einem Führungskanal 22 geführtes Ende 16 entsprechend seitlich gegenüber der in Figur 3 dargestellten Position ausgelenkt wird. Die seitliche Auslenkung bewirkt, daß der exzentrisch an der Welle 10 angebrachte Federdraht 11 ein Drehmoment auf die Welle 10 überträgt und dadurch die Sperrorgane 9 aus der Auflagefläche 7 heraus nach oben verschwenkt. In Figur 6 ist das herausgeschwenkte Sperrorgan 9 ersichtlich, welches zwischen die Mitnehmer 21 des Bandwickelkerns 19 eingreift.

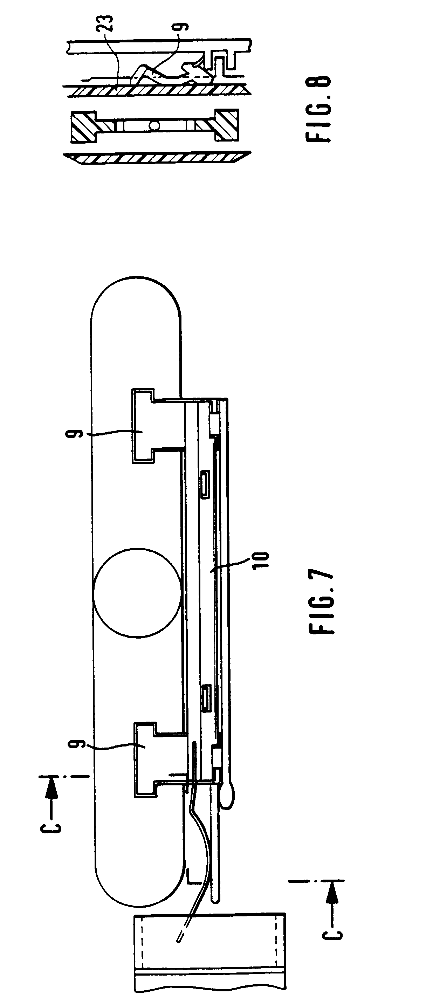

In Figur 7 befindet sich der Schieber 2 ebenfalls in der Aufbewahrungsposition, also vollständig im Gehäuse 1, wobei jedoch auf dem Schieber 2 eine an ihren Flachseiten geschlossene Digitalkassette 23 (Figur 8) aufliegt. Der Federdraht 11 übt zwar wie in Figur 5 ein Drehmoment auf die Welle 10 aus, die jedoch dadurch nur so weit gedreht wird, bis die Sperrorgane 9 an der Digitalkassette 23 anliegen. In Figur 8 ist dieser Zustand im Querschnitt dargestellt.

Figur 9 zeigt die Draufsicht auf eine Vorrichtung mit quer angeordnetem Schieber 24, bei dem eine Leiste 25 mit vorderer Steuerkante 26 bei eingeschobenem Schieber 24 mit dem gebogenen Federdraht 11 in Berührung kommt und diesen gleichermaßen wie bei dem vorausgegangenen Ausführungsbeispiel auslenkt.

## Patentansprüche

1. Vorrichtung zur Aufbewahrung von Magnetbandkassetten, bestehend aus einem Gehäuse (1) und einem gegen eine Federkraft in das Gehäuse in eine Aufbewahrungsposition einschiebbaren Schieber (2), der in die beiden Bandwickelkerne einer in der Vorrichtung aufbewahrten, auf der Auflagefläche des Schiebers aufliegenden Kompaktkassette eingreifende Sperrorgane (9) hat, die schwenkbar gelagert und in der Entnahmeposition des Schiebers (2) unter der Auflagefläche (7) gehalten und in der Aufbewahrungsposition des Schiebers (2) von einer Steuerkante (13) in die Bandwickelkerne (19) einschwenkbar sind,
dadurch gekennzeichnet,
daß an den beiden Sperrorganen (9) ein kreissegmentförmig gebogener Federdraht (11) mit seinem einen Ende exzentrisch zur Schwenkachse angreift, wobei dessen andere Ende (16) am Boden des Schiebers befestigt oder seitlich verschiebbar gelagert ist, und daß bei in der Aufbewahrungsposition befindlichem Schieber (2) die innen am Boden (12) des Gehäuses (1) abstehende Steuerkante gegen den Federdraht (11) drückt, so daß dieser ein Drehmoment auf die Sperrorgane (9) überträgt, welches diese von der Auflagefläche (7) nach oben drückt und bei aufliegender Kompaktkassette in deren Bandwickelkerne (19) einschwenkt.

## Claims

1. Device for storing magnetic tape cassettes, comprising a housing (1) and a slider member (2), which can be pushed into a storage position in the housing against a spring force and which has locking devices (9), which engage in the two tape reel hubs of a compact cassette placed on the supporting surface of the slider member and stored in the device, which locking devices (9) are pivotally mounted and when the slider member (2) is in the removal position are kept beneath the supporting surface (7) and when the slider member (2) is in the storage position can be pivoted into the tape reel hubs (19) by means of a control edge (13),
characterised in that
one end of a spring wire (11), which is curved in the shape of a segment of a circle, acts on the two locking devices (9) eccentrically of the pivot axis, the other end (16) thereof being fastened to, or mounted so as to be laterally displaceable on, the base of the slider member; and when the slider member (2) is in the storage position the control edge, which projects from the base (12) inside the housing (1), presses against the spring wire (11) so that the spring wire (11) applies to the locking devices (9) a torque, which presses the locking devices (9) upwards from the supporting surface (7) and, if a compact cassette is lying in place, pivots them into the tape reel hubs (19) thereof.

## Revendications

1. Dispositif de rangement de cassettes à bande magnétique, constitué d'un boîtier (1) et d'un tiroir (2) qui peut s'enfiler dans le boîtier dans une position de rangement à l'encontre d'une force élastique et qui viennent en prise dans les deux bobineaux de bande d'une cassette compacte rangée dans le disposition et reposant sur la surface de pose du tiroir, qui sont portés avec liberté de pivotement et sont maintenus dans la position de prélèvement du tiroir (2), sous la surface de pose (7), et qui, dans la position de rangement du tiroir (2), peuvent pivoter sous l'action d'une arête de commande (13) pour venir dans les bobineaux de bande (19),
caractérisé par le fait
qu'un fil élastique (11) cintré en forme de segment de cercle, agit, par sa première extrémité, sur les deux organes de bridage (9), excentriquement par rapport à l'axe de pivotement, son autre extrémité (16) étant fixée au fond du tiroir ou portée avec liberté de coulisser latéralement, et que, dans le cas d'un tiroir (2) se trouvant dans la position de rangement, l'arête de commande, qui saille intérieurement sur le fond (12) du boîtier (1), pousse contre le fil élastique (11) de sorte que celui-ci transmet aux organes de bridage (9) un moment de rotation qui les pousse vers le haut depuis la surface de pose (7) et, la cassette compacte y reposant, les fait pivoter dans ses bobineaux de bande (19).
